# EUROPÄISCHE PATENTSCHRIFT

(11) **EP 1 692 146 B1**
(45) Veröffentlichungstag und Bekanntmachung des Hinweises auf die Patenterteilung: **01.08.2007**
(21) Anmeldenummer: 04803461.5
(22) Anmeldetag: 02.12.2004
(51) Int. Cl.: C07F 7/08, C07F 7/18

(54) **VERFAHREN ZUR HERSTELLUNG VON ISOCYANATOORGANOSILANEN**
METHOD FOR THE PRODUCTION OF ISOCYANATOORGANOSILANES
PROCEDE POUR PRODUIRE DES ISOCYANATO-ORGANOSILANES

(30) Priorität: 11.12.2003 DE 10358061
(43) Veröffentlichungstag der Anmeldung: 23.08.2006
(73) Patentinhaber: Wacker Chemie AG, 81737 München (DE)
(72) Erfinder: RÜDINGER, Christoph, 82319 Starnberg (DE); BOGNER, Ragnar, 81671 München (DE); EBERLE, Hans-Jürgen, 81477 München (DE); WEIS, Johann, 82054 Sauerlach (DE)
(74) Vertreter: Fränkel, Robert
(86) Internationale Anmeldenummer: PCT/EP2004/013724
(87) Internationale Veröffentlichungsnummer: WO 2005/056564

(56) Entgegenhaltungen:
- EP-A- 0 649 850
- EP-A- 1 010 704
- US-A- 6 008 396

## Beschreibung

Die Erfindung betrifft ein Verfahren zur Herstellung von Isocyanatoorganosilan.

Es besteht seit geraumer Zeit ein großes Interesse an einer wirtschaftlichen Methode zur Herstellung von Isocyanatoorganosilanen in hohen Ausbeuten und Reinheiten. Die genannten Verbindungen sind von hoher wirtschaftlicher Bedeutung, da sie beispielsweise industriell als Haftvermittler zwischen organischen Polymeren und anorganischen Materialien (sog. adhesion promoter, coupling agents, crosslinker) eingesetzt werden.

Zur Herstellung werden dabei Verfahren bevorzugt, bei denen von wenig gefährlichen oder gänzlich ungefährlichen Edukten ausgegangen wird, um so die Handhabung und Durchführung zu erleichtern. Bei den bisher eingesetzten Verfahren werden Isocyanatoorganosilane jedoch in relativ geringen Mengen und in wenig effizienten und teuren Prozessen hergestellt.

So werden beispielsweise bei dem in US 6,008,396 beschriebenen Verfahren Carbamatoorganosilane in inerten heißen Medien unter Abspaltung von Alkohol in die Isocyanate umgewandelt. Dieser Prozess kann jedoch nur semi-kontinuierlich betrieben werden, da die Konzentration an Verunreinigungen im Medium bereits nach kurzer Zeit in einer Art und Weise ansteigt, dass die gewünschte Reinheit des Produktes nicht mehr gewährleistet ist.

Bei dem in US 3,598,852 beschriebenen Verfahren werden Carbamatoorganosilane im vakuum verdampft und das gebildete Isocyanatosilan kontinuierlich abdestilliert.

Bei dem in EP 1010704 A2 beschriebenen Verfahren werden Carbamatoorganosilane in flüssiger Phase thermisch unter Katalyse von Sn(II)-Chlorid zu den entsprechenden Isocyanatoorganosilanen gespalten. Als nachteilig bei diesem Prozess erweist sich insbesondere das sehr aufwendige Verfahren zur Isolierung und Reinigung der gewünschten Produkte, was in der Folge zu niedrigen Ausbeuten führt und somit für eine großtechnische Umsetzung uninteressant erscheint.

Aus EP 649850 B1 ist die thermische Spaltung (Thermolyse) von Carbamatoorganosilanen in der Gasphase unter Normal- oder reduziertem Druck bekannt. Die durch dieses Verfahren erhältlichen Ausbeuten, insbesondere an Isocyanatomethylorganosilanen, sind jedoch unter den dort beschriebenen Bedingungen unbefriedigend.

Es bestand daher die Aufgabe, ein weiteres Verfahren zur Herstellung von Isocyanatoorganosilanen bereit zu stellen, das die aus dem Stand der Technik bekannten Probleme löst.

Die Aufgabe wurde dadurch gelöst, dass die Thermolyse durch Einwirkung von Mikrowellenstrahlung induziert wird.

Gegenstand der Erfindung ist ein Verfahren zur Herstellung von Isocyanatoorganosilanen durch Thermolyse von Carbamatoorganosilanen, dadurch gekennzeichnet, dass die Thermolyse durch Einwirkung von Mikrowellenstrahlung erfolgt.

Unter dem Begriff "Mikrowellen" sind dabei elektromagnetische Schwingungen mit einer Frequenz von 300 MHz bis 300 GHz zu verstehen.

In einer bevorzugten Ausführungsform des erfindungsgemäßen Verfahrens werden Isocyanatoorganosilane der allgemeinen Formel (1)

R²R³R⁴Si-R¹-N=C=O (1),

wobei
- R: einen einwertigen C₁-C₁₀-Alkylrest,
- R¹: einen zweiwertigen C₁-C₆-Kohlenwasserstoffrest und
- R², R³ und R⁴: jeweils unabhängig voneinander einen Methyl-, Ethyl-, n-Propyl-, i-Propyl- Methoxy-, Ethoxy-, n-Propoxy- oder i-Propoxyrest bedeuten,
durch Thermolyse von Carbamatoorganosilanen der allgemeinen Formel (2)

R²R³R⁴Si-R¹-NH-CO-OR (2),

hergestellt.

Das erfindungsgemäße Verfahren bietet hinsichtlich der erzielbaren Reaktionsgeschwindigkeit und Selektivität signifikante Vorteile gegenüber den aus dem Stand der Technik bekannten Verfahren.

Bei dem Verfahren werden aus den Carbamatoorganasilanen, insbesondere solchen der allgemeinen Formel (2), durch Thermolyse allgemein C₁-C₁₀-Alkohole der allgemeinen Formel ROH abgespalten, insbesondere Methanol, Ethanol, Propanol, Butanol, Isobutanol, Pentanol, Hexanol, Isohexanol, Cyclohexanol und 2-Ethylhexanol. Bevorzugt werden Methanol und Ethanol, besonders bevorzugt Methanol, abgespalten.

Mit dem erfindungsgemäßen Verfahren lassen sich generell auch bislang nur schwer und in mäßigen Ausbeuten erhältliche Isocyanatoorganosilane enthaltend kurzkettige Spacer zwischen dem Si-Atom und der Isocyanat-Funktion herstellen, insbesondere solche Isocyanatoorganosilane der allgemeinen Formel (1), in denen R¹ für Methylen steht.

Als Spacer **R**¹ zwischen der Organosilylgruppe und der Carbamatogruppe können generell lineare oder verzweigte gesättigte oder ungesättige C₁-C₆-Kohlenwasserstoffgruppen eingesetzt werden. Bevorzugte Spacer R¹ sind Alkylreste, insbesondere lineare Alkylreste, besonders bevorzugt werden Methylen, Ethylen und Propylen eingesetzt.

R², R³ und R⁴ sind vorzugsweise Methyl-, Methoxy-, Ethoxy-, n-Propoxy- oder i-Propoxyreste.

Nach dem erfindungsgemäßen Verfahren können insbesondere Verbindungen der allgemeinen Formel 1, bei denen
R², R³ = Methoxy, R⁴ = Methyl und R¹ = Methylen; oder
R² = Methoxy, R³ = Ethoxy, R⁴ = Methyl und R¹ = Methylen; oder R², R³ = Ethoxy, R⁴ = Methoxy und R¹ = Methylen; oder
R², R³ = Methoxy, R⁴ - Ethoxy und R¹ = Methylen bedeuten,

in hohen Ausbeuten und Reinheiten hergestellt werden.

Das erfindungsgemäße Verfahren kann optional in Gegenwart eines Katalysators durchgeführt werden. Als Katalysatoren kommen grundsätzlich homogene und heterogene Katalysatoren gleichermaßen in Betracht.

Geeignete homogene Katalysatoren sind eine oder mehrere Verbindungen ausgewählt aus der Gruppe enthaltend lösliche Zinn-, Blei-, Cadmium-, Antimon-, Wismut-, Titan-, Zirkonium-, Niob-, Eisen-, Kobalt-, Mangan-, Chrom-, Molybdän-, Wolfram-, Nickel-, Kupfer- und Zinkverbindungen sowie lösliche organische Stickstoffbasen.

Insbesondere eignen sich 1,4-Diazabicyclo(2,2,2)oktan, Dibutylzinndilaurat, Dibutylzinnmaleat, Dibutylzinndiacetat und Dimethylzinndichlorid.

Als heterogene Katalysatoren können allgemein Metalle und/oder Verbindungen enthaltend Elemente ausgewählt aus der Gruppe Sn (I), Sn (II), Pb (II), Zn (II), Cu (I), Cu (II), Co (I) Co (II), Na, K, Li, Rb, Cs, Sr, Ba, Mg, Ca, Cr, Mo, Ti, V, W, Ce, Fe, Ni, Si, Al, Ge, Ga, In, Sc, Y, La, Lanthanide, Pd, Pt, Co, Rh, Cu, Ag, Au, Zn, N, B, C, und deren Mischungen und Legierungen enthaltend die vorgenannten Elemente verwendet werden.

Bevorzugte heterogene Katalysatoren sind Oxide, Hydroxyde, Hydroxid-oxide, Mischoxide, Acetate, Formiate, Oxalate, Tartrate, Citrate, Nitrate, Carbonate oder Mischungen der vorgenannten Verbindungen eines oder mehrere Elemente ausgewählt aus der Gruppe enthaltend Sn (I), Sn (II), Pb (II), Zn (II), Cu (I), Cu (II), Co (I), Co(II), Na, K, Li, Rb, Cs, Sr, Ba, Mg, Ca, Cr, Mo, Ti, V, W, Ce, Fe, Ni, Si, Al, Ge, Ga, In, Sc, Y, La, Lanthanide, Pd, Pt, Rh, Cu, Ag, Au und Cd.

Insbesondere eignen sich heterogene Katalysatoren enthaltend eine oder mehrere Verbindungen ausgewählt aus der Gruppe enthaltend TiO₂, ZrO₂, HfO₂ , Al₂O₃, BaO, CaO, MgO, CeO₂, La₂O₃, Y₂O₃, Sm₂O₃, Yb₂O₃, Cr₂O₃, ZnO, V₂O₄, MnO₂, NiO, In₂O₃, Ga₂O₃, GeO₂, FeO, Fe₂O₃, Fe₃O₄, CuO, Co₃O₄, Fe (MoO₄)₃, MgO/CsOH, MgO/NaOH, Aluminosilicate, insbesondere Zeolithe in unterschiedlichen Porengrößen, Cordierit der Zusammensetzung 2 MgO * 2 Al₂O₃* 5 SiO₂, Heteropolysäuren, Kohlenstoffmodifikationen, z. B. Graphit, Übergangsmetallnitride, -boride, -silicide und-carbide.

Diese Metalle, Metallverbindungen oder deren Mischungen können auch auf poröse oder unporöse Trägermaterialien aufgebracht werden. Besonders geeignete Träger aus inerten refraktorischen Materialien sind oxidische und nichtoxidische Keramik, SiO₂, Kohlenstoff, Alumosilikate, Magnesium-Alumosilikate oder beständige metallische Werkstoffe, insebsondere Glaswolle, Quarzwolle, Keramiken, oxidische Massen, wie SiO₂, Al₂O₃, Fe₂O₃ oder Steatit.

Die Katalysatorträger können dabei in Form unregelmäßiger Granulate, Kugeln, Ringe, Halbringe, Sättel, Zylinder, Trilobs oder Monolithe eingesetzt werden.

Das erfindungsgemäße Verfahren wird allgemein mit Mikrowellen im Frequenzbereich von 300 MHz bis 300 GHz insbesondere in den ISM-Frequenzbänder mit den Mittenfrequenzen von 896 MHz, 915 MHz, 922 MHz, 2,45 GHz, 5,8, GHz, 24,1 GHz, 61 GHz, 122 GHz, 245 GHZ, besonders bevorzugt bei 915 MHz, 2,45 GHz und 5,8 GHz durchgeführt. Die Mikrowellen werden mit Generatoren mit bekannten Aktivkomponenten wie Elektronenröhren wie z.B. Magnetron, Klystron, Gyrotron oder Halbleiterverstärkern erzeugt. Bevorzugt sind luft- oder wassergekühlte Magnetrone mit Einzelsendeleistungen von 100 W bis 100 kW, besonders bevorzugt 300 W bis 30 kW. Die Reaktion, initiiert durch die Bestrahlung der Edukte mit Mikrowellen muss in einem Reaktionsraum durchgeführt werden, der für die Bestrahlung mit Mikrowellen geeignet ist. Als Material für den Reaktionsraum kommen chemisch beständige Materialien, die für Mikrowellen durchlässig sind, in Frage wie z.B. mikrowellentransparente Gläser, Quarzglas, mikrowellentransparente oxydische Keramik, mikrowellentransparente nichtoxydische Keramik oder chemisch beständige Materialien, die für Mikrowellen undurchlässig sind wie z.B. Metalle, die zur Einstrahlung der Mikrowellen mit Fenstern aus mikrowellentransparentem Material wie z.B. mikrowellentransparente Gläser, Quarzglas, mikrowellentransparenter oxydischer Keramik, mikrowellentransparenter nichtoxydischer Keramik ausgerüstet sind. Die Mikrowellen werden über bekannte Komponenten wie Launcher, Hohlleiter, Tuner, Zirkulatoren, Isolatoren, Schlitzantennen, Irisblenden oder direkt Generator strahlend in den Reaktionsraum eingekoppelt.

Der Reaktionsraum kann frei oder mit Einbauten versehen sein. Die Einbauten beeinflussen die Strömungs-, Temperatur- und Mikrowellenverteilung im Reaktionsraum. Die Einbauten können aus mikrowellentransparentem Material wie mikrowellentransparenten Gläsern, Quarzglas, mikrowellentransparenter oxydischer Keramik, mikrowellentransparenter nichtoxydischer Keramik bestehen und beeinflussen dann nur die Fluidströmung im Reaktionsraum. Bestehen die Einbauten aus mikrowellenreflektierendem Material (z.B. gut leitfähige Metalle, Graphit) oder mikrowellenabsorbierenden Materialien (spezielle Keramiken, Siliziumcarbid, magnetische Werkstoffe oder elektrische Widerstandsmaterialien) wird auch die Mikrowellen- und Temperaturverteilung beeinflusst.

In den Reaktionsraum kann bei optionaler Durchführung des erfindungsgemäßen Verfahrens in Gegenwart eines Katalysators zusammen mit den Einbauten oder alleine einer oder mehrere der oben angeführten heterogenen Katalysatoren eingebracht sein oder kontinuierlich eingebracht werden.

Der Reaktionsraum kann auch so ausgebildet werden, dass der gesamte Reaktionsraum oder ein Teil des Reaktionsraumes mit einem fluidisierten Feststoff gefüllt ist, wobei der Feststoff als Mikrowellenabsorber, Wärmeträger und/oder Katalysator wirken kann.

Zur allgemeinen Gestaltung von Mikrowellenbestrahlungssystemen sei an dieser Stelle auch auf Literatur wie A. Mühlbauer, "Industrielle Elektrowärmetechnik", Essen Vulkan-Verlag, 1992; D. M. P. Mingos, "The Application of Microwaves to the Processing of Inorganic Materials", British Ceramic Transactions, 91, 1992; G. Orth, "Mikrowellenerwärmung in der Industrie" RWE-Industrieforum, Essen, 1993 verwiesen.

Das Verfahren kann generell im Batch-Betrieb (absatzweise), semi-kontinuierlich oder kontinuierlich durchgeführt werden. Bevorzugt ist das kontinuierliche Abdestillieren eines oder mehrerer flüchtiger Reaktionsprodukte aus dem Reaktionsraum, wobei sowohl das Reaktionsprodukt Alkohol als auch das Reaktionsprodukt Isocyanatoorganosilan separat oder zusammen abdestilliert werden können.

In einer bevorzugten Ausführungsform des erfindungsgemäßen Verfahrens wird der Reaktionsraum in eine Destillationskolonne eingebracht, wobei eine Reaktivdestillation gebildet wird. Die schwersiedenden Reaktionsprodukte können im Sumpf der Kolonne, unterhalb des Reaktionsraumes, die Leichtflüchtigen am Kopf der Kolonne, oberhalb des Reaktionsraumes abgenommen werden. Mittelfraktionen können sowohl zwischen dem Reaktionsteil und dem Kopf der Kolonne als auch zwischen Reaktionsteil und dem Sumpf der Kolonne abgezogen werden.

Die Carbamatoorganosilane, insbesondere solche der allgemeinen Formel (2), werden bevorzugt in einem Temperaturbereich von 150-500°C, besonders bevorzugt in einem Bereich von 200-400°C, insbesondere in einem Bereich von 250-350°C, unter Mikrowellenbestrahlung umgesetzt. Die Temperatur kann dabei alleine durch Mikrowelleneinstrahlung erreicht werden oder durch eine Kombination aus konventioneller Heizung und Mikrowellenstrahlung. Die konventionelle Heizleistung kann gleichzeitig oder sequenziell zur Mikrowelleneinstrahlung eingebracht werden. Des weiteren ist es möglich, die Mikrowellenheizung mit einer konventionellen Kühlung zu kombinieren, um bei Einhaltung einer vorgegebenen Temperatur eine höhere Mikrowellenstrahlungsintensität applizieren zu können.

Die Mikrowellenleistung wird so gewählt, dass unter den sonstigen Randbedingungen des Wärmehaushaltes der Reaktionszone, wie Wärmezufuhr und Wärmeabfuhr über Isolationsverluste, konventionelle Kühlung oder Heizung, Wärmezufuhr und Wärmeabfuhr über die latente Wärme der Reaktionsmischung, Verdampfungskühlung der Reaktionsmischung, Kühlung oder Heizung durch Einspritzen kalter bzw. heisser inerter Gase bzw. Flüssigkeiten oder Reaktanden, eine vorgewählte Reaktionstemperatur aufrechterhalten werden kann.

Das Verfahren kann mit oder ohne Trägergas, z. B. Stickstoff, Wasserstoff, Luft, Edelgasen, wie Helium, Argon, Dämpfe kohlenstoffhaltiger Stoffe wie Kohlenmonoxid, Kohlendioxid, Methan, Oktan, Toluol, Dekalin, Tetralin, durchgeführt werden, wobei die Trägerkomponente auch flüssig zugegeben werden kann und dann erst in der beheizten Zone unter Bildung eines Gasstromes verdampft. Mittels des Trägergases kann erreicht werden, die Reaktionsmischung zu verdünnen, zu heizen oder zu kühlen, Feststoffe zu fluidisieren und/oder zu transportieren und definierte Strömungsverhältnisse einzustellen.

Das erfindungsgemäße Verfahren wird bevorzugt in einem Druckbereich von 0.01 - 100 bar, besonders bevorzugt bei 0.5 - 40 bar, insbesondere in einem Bereich von 1-10 bar, durchgeführt

Das erfindungsgemäße Verfahren birgt gegenüber den aus dem Stand der Technik bekannten Verfahren den großen Vorteil, dass die gewünschten Produkte in einem einfachen nachgelagerten Destillationsschritt in hoher Reinheit (>97 %) gewonnen werden können. Die Bildung, der bei hohen thermischen Belastungen beobachteten sechsgliedrigen Isocyanurate wird durch das vorliegende Verfahren praktisch vollständig vermieden.

In einer speziellen Ausführungsform des erfindungsgemäßen Verfahrens wird dem Reaktionsraum, in dem die Mikrowelleneinstrahlung erfolgt (Mikrowellenreaktionsraum), eine Reaktionszone nachgeschaltet (Nachreaktionszone) optional enthaltend einen heterogenen Katalysator.
Da Gase dichtebedingt nur in einem sehr geringen Maße Mikrowellenstrahlung absorbieren, kann das Verfahren vorteilhaft mit einer Nachreaktionszone versehen werden, in der das in der Mikrowellenbestrahlungszone teilweise oder vollständig verdampfte Gemisch enthaltend Carbamatorganosilan-Dampf weiter zu Isocyanatorganosilanen umgesetzt werden. Besonders bevorzugte Ausgestaltungen der Nachreaktionszone sind mit einem heterogenen Katalysator gefüllte Gasphasenreaktoren, wobei die heterogenen Katalysatoren ausgewählt werden aus den oben genannten Ausführungsformen optional aufgebracht auf die oben genannten Trägermaterialen.

Die folgenden Beispiele dienen der Veranschaulichung des erfindungsgemäßen Verfahrens und sind in keiner Weise als Einschränkung zu betrachten.

### Vergleichsbeispiel:

### Herstellung von γ-Isocyanatopropyltrimethoxysilan aus Methylcarbamatopropyltrimethoxysilan

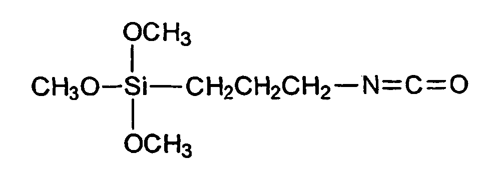

20 ml Methylcarbamatopropyltrimethoxysilan wurden mit 2 g Fe₂O₃-Katalysator in einem Glasreaktionsgefäß mit Siedeblase und Kopfkondensator mit einem Ölbad sehr schnell auf 225°C erhitzt. Innerhalb einer Reaktionszeit von 60 min wurde kein Kopfkondensat gebildet. Eine GC-Analyse des Blaseninhaltes ergab folgende Zusammensetzung:
96 Gew.-% Methylcarbamatopropyltrimethoxysilan
0,9 Gew.-% γ-Isocyanatopropyltrimethoxysilan
0,5 Gew.-% Methanol
2,6 Gew.-% Nebenprodukte

### Beispiel 1:

### Herstellung von γ-Isocyanatopropyltrimethoxysilan aus Methylcarbamatopropyltrimethoxysilan mit Mikrowellenbestrahlung

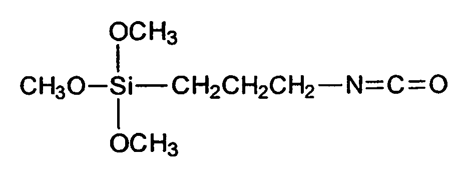

20 ml Methylcarbamatopropyltrimethoxysilan wurde in einem Glasreaktionsgefäß mit Siedeblase und Kopfkondensator in einem Mikrowellenofen mit 300 W Mikrowellenleistung (Frequenz 2,45 GHz) bestrahlt. Innerhalb einer Reaktionszeit von 5 min stieg die Kopftemperatur auf 218°C. Bei dieser Temperatur wurde der Versuch beendet. Es wurden 0,7 ml Kopfkondensat gebildet. Eine GC-Analyse des Blaseninhaltes ergab folgende Zusammensetzung:
90 Gew.-% Methylcarbamatopropyltrimethoxysilan
6,1 Gew.-% γ-Isocyanatopropyltrimethoxysilan
3,9 Gew.-% Nebenprodukte

Eine GC-Analyse des Kopfkondensates ergab folgende Zusammensetzung:
10 Gew.-% Methylcarbamatopropyltrimethoxysilan
3 Gew.-% γ-Isocyanatopropyltrimethoxysilan
85 Gew.-% Methanol

Während im Vergleichsbeispiel nur 0,8 ml Methylcarbamatopropyltrimethoxysilan in 60 min umgesetzt wurden, werden im erfindungsgemäßen Beispiel 2,6 ml Methylcarbamatopropyltrimethoxysilan in 5 min umgesetzt (40fache Reaktionsgeschwindigkeit).

### Beispiel 2:

### Herstellung von γ-Isocyanatopropyltrimethoxysilan aus Methylcarbamatopropyltrimethoxysilan mit Mikrowellenbestrahlung

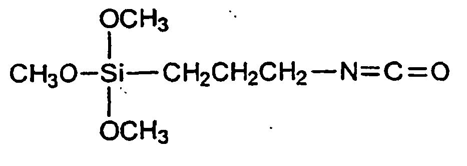

20 ml Methylcarbamatopropyltrimethoxysilan wurden mit 2 g Fe₂O₃-Katalysator in einem Glasreaktionsgefäß mit Siedeblase und Kopfkondensator in einem Mikrowellenofen mit 300 W Mikrowellenleistung (Frequenz 2,45 GHz) bestrahlt. Innerhalb einer Reaktionszeit von 4 min stieg die Kopftemperatur auf 165°C. Bei dieser Temperatur wurde der Versuch beendet. Es wurden 1,7 ml Kopfkondensat gebildet. Eine GC-Analyse des Blaseninhaltes ergab folgende Zusammensetzung:
85 Gew.-% Methylcarbamatopropyltrimethoxysilan
12,5 Gew.-% γ-Isocyanatopropyltrimethoxysilan
2,5 Gew.-% Nebenprodukte

Eine GC-Analyse des Kopfkondensates ergab folgende Zusammensetzung:
25 Gew.-% Methylcarbamatopropyltrimethoxysilan
16 Gew.-% γ-Isocyanatopropyltrimethoxysilan
55 Gew.-% Methanol

Während im. Vergleichsbeispiel nur 0,8 ml Methylcarbamatopropyltrimethoxysilan in 60 min umgesetzt wurden, werden im erfindungsgemäßen Beispiel 4 ml Methylcarbamatopropyltrimethoxysilan in 4 min umgesetzt (75fache Reaktionsgeschwindigkeit). Während im Vergleichsbeispiel fast 300% des Zielproduktes an Nebenprodukten gebildet wird, liefert das erfindungsgemäße Verfahren nur einen Nebenproduktanteil von weniger als 20%.

## Patentansprüche

1. Verfahren zur Herstellung von Isocyanatoorganosilanen durch Thermolyse von Carbamatoorganosilanen, **dadurch gekennzeichnet, dass** die Thermolyse durch Einwirkung von Mikrowellenstrahlung erfolgt.

2. Verfahren nach Anspruch 1, **dadurch gekennzeichnet, dass** Isocyanatoorganosilane der allgemeinen Formel (1)
R²R³R⁴Si-R¹-N=C=O (1),
wobei
R einen einwertigen C₁-C₁₀-Alkylrest,
R¹ einen zweiwertigen C₁-C₆-Kohlenwasserstoffrest und
R²,R³ und R⁴ jeweils unabhängig voneinander einen Methyl-, Ethyl-, n-Propyl-, i-Propyl- Methoxy-, Ethoxy-, n-Propoxy- oder i-Propoxyrest bedeuten,
durch Thermolyse von Carbamatoorganosilanen der allgemeinen Formel (2)
R²R³R⁴Si-R¹-NH-CO-OR (2),
hergestellt werden.

3. Verfahren nach Anspruch 1 oder 2, bei dem die Thermolyse in Gegenwart eines Katalysators erfolgt.

4. Verfahren nach Anspruch 3, bei dem der Katalysator in homogener Form vorliegt.

5. Verfahren nach Anspruch 4, bei dem als Katalysator eine oder mehrere Verbindungen ausgewählt aus der Gruppe enthaltend lösliche Zinn-, Blei-, Cadmium-, Antimon-, Wismut-, Titan-, Zirkonium-, Niob-, Eisen-, Kobalt-, Mangan-, Chrom-, Molybdän-, wolf ram-, Nickel-, Kupfer-, Zinkverbindungen und lösliche organische Stickstoffbasen eingesetzt werden.

6. Verfahren nach Anspruch 4 oder 5, bei dem als Katalysator eine oder mehrere Verbindungen ausgewählt aus der Gruppe enthaltend 1,4-Diazabicyclo(2,2,2)oktan, Dibutylzinndilaurat, Dibutylzinnmaleat, Dibutylzinndiacetat und Dimethylzinndichlorid eingesetzt wird.

7. Verfahren nach Anspruch 3, bei dem der Katalysator in heterogener Form vorliegt.

8. Verfahren nach Anspruch 7 **dadurch gekennzeichnet, dass** als Katalysator Metalle und/oder Verbindungen enthaltend Elemente ausgewählt aus der Gruppe Sn (I) , Sn (II), Pb (II), Zn (II), Cu (I), Cu (II), Co(I), Co (II), Na, K, Li, Rb, Cs, Sr, Ba, Mg, Ca, Cr, Mo, Ti, V, W, Ce, Fe, Ni, Si, Al, Ge, Ga, In, Sc, Y, La und Lanthanide, Pd, Pt, Co, Rh, Cu, Ag, Au, Zn, Cr, Mo, W, Cd, Fe, N, O, B, C, oder Mischungen und Legierungen enthaltend die vorgenannten Elemente verwendet werden.

9. Verfahren nach Anspruch 7 oder 8 **dadurch gekennzeichnet, dass** als Katalysator Oxide, Hydroxyde, Hydroxid-oxide, Mischoxide, Acetate, Formiate, Oxalate, Tartrate, Citrate, Nitrate, Carbonate oder Mischungen der vorgenannten Verbindungen eines oder mehrerer Elemente ausgewählt aus der Gruppe enthaltend Sn (I), Sn (II), Pb (II), Zn (II), Cu (I), Cu (II), Co (I), Co (II), Na, K, Li, Rb, Cs, Sr, Ba, Mg, Ca, Cr, Mo, Ti, V, W, Ce, Fe, Ni, Si, Al, Ge, Ga, In, Sc, Y, La und Lanthanide, Pd, Pt, Rh, Ag, Au, Cd verwendet werden.

10. Verfahren nach Anspruch 7 bis 9 **dadurch gekennzeichnet, dass** als Katalysator eine oder mehrere Verbindungen ausgewählt aus der Gruppe enthaltend TiO₂, ZrO₂, HfO₂, Al₂O₃, BaO, CaO, MgO, CeO₂, La₂O₃, Y₂O₃, Sm₂O₃, Yb₂O₃, Cr₂O₃, ZnO, V₂O₄, MnO₂, NiO, In₂O₃, Ga₂O₃, GeO₂ , FeO , Fe₂O₃, Fe₃O₄, CuO, Co₃O₄, Fe(MoO₄)₃, MgO/CsOH, MgO/NaOH, Aluminosilicate, Zeolithe, Cordierit der Zusammensetzung 2 MgO * 2 Al₂O₃ * 5 SiO₂, Heteropolysäuren, Kohlenstoff, Übergangsmetall-nitride, -boride, -silicide, -carbide verwendet werden.

11. Verfahren nach Anspruch 7 bis 10 **dadurch gekennzeichnet, dass** die Katalysatoren auf einem Träger aufgebracht werden.

12. Verfahren nach Anspruch 7 bis 11 **dadurch gekennzeichnet, dass** als Katalysatorträger inerte refraktorische Materialien eingesetzt werden.

13. Verfahren nach Anspruch 7 bis 12 **dadurch gekennzeichnet, dass** als Katalysatorträger oxidische- und nichtoxidische Keramik, SiO₂, Kohlenstoff, Alumosilikate, Magnesium-Alumosilikate oder beständige metallische Werkstoffe eingesetzt werden.

14. Verfahren nach Anspruch 7 bis 13 **dadurch gekennzeichnet, dass** die Katalysatorträger in Form unregelmäßiger Granulate, Kugeln, Ringe, Halbringe, Sättel, Zylinder, Trilobs oder Monolithe eingesetzt werden.

15. Verfahren nach einem oder mehreren der Ansprüche 1 bis 14, **dadurch gekennzeichnet, dass** dem Mikrowellenreaktionsraum ein Gasphasenreaktor enthaltend einen heterogenen Katalysator nachgeschaltet wird.

## Claims

1. Process for preparing iscocyanatoorganosilanes by thermolysis of carbamatoorganosilanes, wherein the thermolysis takes place by exposure to microwave radiation.

2. Process according to Claim 1, **characterized in that** iscocyanatoorganosilanes of the general formula (1) are prepared
R²R³R⁴ Si-R¹-N=C=O (1),
where
**R** is a monovalent C₁-C₁₀-alkyl radical,
**R**¹ is a divalent C₁-C₆-hydrocarbon radical and
**R**², **R**³ and **R**⁴ are in each case independently of one another, a methyl, ethyl, n-propyl, isopropyl, methoxy, ethoxy, n-propoxy or isopropoxy radical,
by thermolysis of carbamatoorganosilanes of the general formula (2)
R²R³R⁴Si-R¹-NH-CO-OR (2).

3. Process according to Claim 1 or 2, wherein the thermolysis takes place in the presence of a catalyst.

4. Process according to Claim 3, wherein the catalyst is in homogeneous form.

5. Process according to Claim 4, wherein as catalyst one or more compounds selected from the group consisting of soluble compounds of tin, lead, cadmium, antimony, bismuth, titanium, zirconium, niobium, iron, cobalt, manganese, chromium, molybdenum, tungsten, nickel, copper and zinc, and soluble organic nitrogen bases, are used.

6. Process according to Claim 4 or 5, wherein as catalyst one or more compounds selected from the group consisting of 1,4-diazabicyclo[2.2.2]octane, dibutyltin dilaurate, dibutyltin maleate, dibutyltin diacetate and dimethyltin dichloride are used.

7. Process according to Claim 3, wherein the catalyst is in heterogeneous form.

8. Process according to Claim 7, **characterized in that** as catalyst metals and/or compounds comprising elements selected from the group Sn(I), Sn(II), Pb(II), Zn(II), Cu(I), Cu(II), Co(I), Co(II), Na, K, Li, Rb, Cs, Sr, Ba, Mg, Ca, Cr, Mo, Ti, V, W, Ce, Fe, Ni, Si, A1, Ge, Ga, In, Sc, Y, La and lanthanides, Pd, Pt, Co, Rh, Cu, Ag, Au, Zn, Cr, Mo, W, Cd, Fe, N, 0, B, C, or mixtures and alloys comprising the abovementioned elements are used.

9. Process according to Claim 7 or 8, **characterized in that** as catalyst oxides, hydroxides, oxyhydroxides, mixed oxides, acetates, formates, oxalates, tartrates, citrates, nitrates, carbonates, or mixtures of the abovementioned compounds of one or more elements selected from the group consisting of Sn(I), Sn (II), Pb(II), Zn (II), Cu(I), Cu (II), Co (I), Co (II), Na, K, Li, Rb, Cs, Sr, Ba, Mg, Ca, Cr, Mo, Ti, V, W, Ce, Fe, Ni, Si, Al, Ge, Ga, In, Sc, Y, La and lanthanides, Pd, Pt, Rh, Ag, Au and Cd are used.

10. Process according to Claim 7 to 9, **characterized in that** as catalyst one or more compounds selected from the group consisting of TiO₂, ZrO₂, HfO₂, Al₂O₃, BaO, CaO, MgO , CeO₂, La₂O₃, Y₂O₃ , Sm₂O₃, Yb₂O₃, Cr₂O₃, ZnO, V₂O₄, MnO₂, NiO, In₂O₃, Ga₂O₃, GeO₂, FeO, Fe₂O₃, Fe₃O₄, CuO, CO₃O₄, Fe (MoO₄)₃, MgO/CsOH, MgO/NaOH, aluminosilicates, zeolites, cordierite of the composition 2 MgO · 2 Al₂O₃ · 5 SiO₂, heteropolyacids, carbon, transition metal nitrides, transition metal borides, transition metal silicides and carbides are used.

11. Process according to Claim 7 to 10, **characterized in that** the catalysts are applied to a support.

12. Process according to Claim 7 to 11, **characterized in that** as catalyst supports inert refractory materials are used.

13. Process according to Claim 7 to 12, **characterized in that** as catalyst supports oxidic and nonoxidic ceramics, SiO₂, carbon, aluminosilicates, magnesium aluminosilicates or resistant metallic materials are used.

14. Process according to Claim 7 to 13, **characterized in that** the catalyst supports are used in the form of irregular granules, spheres, rings, half-rings, saddles, cylinders, trilobes or monoliths.

15. Process according to one or more of Claims 1 to 14, **characterized in that** a gas-phase reactor containing a heterogeneous catalyst is inserted downstream of the microwave reaction chamber.

## Revendications

1. Procédé de préparation d'isocyanatoorganosilanes par thermolyse de carbamatoorganosilanes, **caractérisé en ce que** la thermolyse se fait par l'action d'un rayonnement à micro-ondes.

2. Procédé suivant la revendication 1, **caractérisé en ce que** l'on prépare des isocyanatoorganosilanes de la formule générale (1).
R²R³R⁴Si-R¹-N=C=O (1)
dans laquelle
R représente un radical alkyle monovalent en C₁ à C₁₀,
R¹ représente un radical hydrocarboné divalent en C₁ à C₆ et
R², R³ et R⁴ représentent à chaque fois indépendamment les uns des autres un radical méthyle, éthyle, n-propyle, i-propyle, méthoxy, éthoxy, n-propoxy ou i-propoxy,
par thermolyse de carbamatoorganosilanes de la formule générale (2)
R²R³R⁴Si -R¹-NH-CO-OR (2)

3. Procédé suivant la revendication 1 ou 2, dans lequel la thermolyse se fait en présence d'un catalyseur.

4. Procédé suivant la revendication 3, dans lequel le catalyseur est présent sous forme homogène.

5. Procédé suivant la revendication 4, dans lequel on met en oeuvre en tant que catalyseur un ou plusieurs composés choisis dans le groupe comprenant des composés solubles d'étain, de plomb, de cadmium, d'antimoine, de bismuth, de titane, de zirconium, de niobium, de fer, de cobalt, de manganèse, de chrome, de molybdène, de tungstène, de nickel, de cuivre, de zinc et des bases azotées organiques solubles.

6. Procédé suivant la revendication 4 ou 5, dans lequel on met en oeuvre en tant que catalyseur un ou plusieurs composés choisis dans le groupe comprenant le 1,4-diazabicyclo(2,2,2)octane, le dilaurate de dibutylétain, le maléate de dibutylétain, le diacétate de dibutylétain et le dichlorure de diméthylétain.

7. Procédé suivant la revendication 3, dans lequel le catalyseur est présent sous forme hétérogène.

8. Procédé suivant la revendication 7, **caractérisé en ce que** l'on utilise en tant que catalyseur des métaux et / ou des composés contenant des éléments choisis dans le groupe comprenant Sn(I), Sn(II), Pb(II), Zn(II), Cu(I), Cu(II), Co (I), Co(II), Na, K, Li, Rb, Cs, Sr, Ba, Mg, Ca, Cr, Mo, Ti, V, W, Ce, Fe, Ni, Si, Al, Ge, Ga, In, Sc, Y, La et des lanthanides, Pd, Pt, Co, Rh, Cu, Ag, Au, Zn, Cr, Mo, W, Cd, Fe, N, O, B, C, ou des mélanges et alliages contenant les éléments précités.

9. Procédé suivant la revendication 7 ou 8, **caractérisé en ce que** l'on utilise en tant que catalyseur des oxydes, des hydroxydes, des hydroxyoxydes, des oxydes mixtes, des acétates, des formiates, des oxalates, des tartrates, des citrates, des nitrates, des carbonates ou des mélanges des composés précités d'un ou plusieurs éléments choisis dans le groupe comprenant Sn(I), Sn(II), Pb(II), Zn(II) , Cu (I), Cu(II) , Co(I), Co(II), Na, K, Li, Rb, Cs, Sr, Ba, Mg, Ca, Cr, Mo, Ti, V, W, Ce, Fe, Ni, Si, Al, Ge, Ga, In, Sc, Y, La et des lanthanides, Pd, Pt, Rh, Ag, Au, Cd.

10. Procédé suivant les revendications 7 à 9, **caractérisé en ce que** l'on utilise en tant que catalyseur un ou plusieurs composés choisis dans le groupe comprenant TiO₂, ZrO₂, HfO₂, Al₂O₃, BaO, CaO, MgO, CeO₂, La₂O₃, Y₂O₃, Sm₂O₃, Yb₂O₃, Cr₂O₃, ZnO, V₂O₄, MnO₂, NiO, In₂O₃, Ga₂O₃, GeO₂, FeO, Fe₂O₃, Fe₃O₄, CuO, Co₃O₄, Fe (MoO₄)₃, MgO/CsOH, MgO/NaOH, des aluminosilicates, des zéolites, de la cordiérite de composition 2 MgO * 2 Al₂O₃ * 5 SiO₂, des hétéropolyacides, du carbone, des nitrures, borures, siliciures, carbures de métaux de transition.

11. Procédé suivant les revendications 7 à 10, **caractérisé en ce que** les catalyseurs sont appliqués sur un support.

12. Procédé suivant les revendications 7 à 11, **caractérisé en ce que** l'on met en oeuvre en tant que supports de catalyseur des matériaux réfractaires inertes.

13. Procédé suivant les revendications 7 à 12, **caractérisé en ce que** l'on met en oeuvre en tant que supports de catalyseur de la céramique oxydique et non oxydique, du SiO₂, du carbone, des aluminosilicates, des silicates d'aluminium - magnésium ou des matériaux métalliques stables.

14. Procédé suivant les revendications 7 à 13, **caractérisé en ce que** les supports de catalyseur sont mis en oeuvre sous forme de granulés irréguliers, de billes, d'anneaux, de demi-anneaux, de selles, de cylindres, de trilobes ou de monolithes.

15. Procédé suivant une ou plusieurs des revendications 1 à 14, **caractérisé en ce que** l'espace de réaction par micro-ondes est suivi en aval d'un réacteur en phase gazeuse contenant un catalyseur hétérogène.
